# EUROPEAN PATENT APPLICATION

(11) **EP 4 344 304 A1**
(43) Date of publication of application: **27.03.2024**
(21) Application number: 22828828.8
(22) Date of filing: 24.06.2022
(51) Int. Cl.: H04W 40/24, H04L 45/745, H04W 40/18, H04W 84/04

(54) **APPARATUS AND METHOD FOR PERFORMING REGION RE-ROUTING IN WIRELESS COMMUNICATION SYSTEM**

(30) Priority: 25.06.2021 KR 20210083305
(71) Applicant: Samsung Electronics Co., Ltd., Suwon-si, Gyeonggi-do 16677 (KR)
(72) Inventor: HWANG, June, Suwon-si Gyeonggi-do 16677 (KR)
(74) Representative: Gulde & Partner
(86) International application number: PCT/KR2022/009049
(87) International publication number: WO 2022/270981

(57) **Abstract**

The present disclosure relates to a 5th generation (5G) or pre-5G communication system for supporting a higher data transmission rate than a 4th generation (4G) communication system such as Long-Term Evolution (LTE). According to various embodiments of the present disclosure, provided is an operation method of an integrated access and backhaul (IAB) node in a wireless communication system, the method comprising the steps of: receiving flow control feedback; determining whether a first link corresponding to a specific routing identifier (ID) is unavailable, on the basis of the flow control feedback; if the first link is unavailable, then selecting one entry among at least one entry in a backhaul (BH) routing configuration; selecting an available second link corresponding to the selected entry; and performing routing on the basis of the available second link.

## Description

### [Technical Field]

The disclosure relates generally to a wireless communication system and, more particularly to, an apparatus and a method for performing local re-routing based on a connection failure or flow control in an integrated access and backhaul system in a wireless communication system.

### [Background Art]

To meet the demand for wireless data traffic having increased since deployment of 4th generation (4G) communication systems, efforts have been made to develop an improved 5th generation (5G) or pre-5G communication system. Therefore, the 5G or pre-5G communication system is also called a "beyond 4G network" communication system or a "post long term evolution (post LTE)" system.

The 5G communication system is considered to be implemented in ultrahigh frequency (mmWave) bands (e.g., 60GHz bands) so as to accomplish higher data rates. To decrease propagation loss of the radio waves and increase the transmission distance in the ultrahigh frequency bands, beamforming, massive multiple-input multiple-output (massive MIMO), full dimensional MIMO (FD-MIMO), array antenna, analog beam forming, large scale antenna techniques are discussed in 5G communication systems.

In addition, in 5G communication systems, development for system network improvement is under way based on advanced small cells, cloud radio access networks (cloud RANs), ultra-dense networks, device-to-device (D2D) communication, wireless backhaul, moving network, cooperative communication, coordinated multi-points (CoMP), reception-end interference cancellation and the like.

In the 5G system, hybrid FSK and QAM modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have also been developed.

### [Disclosure of Invention]

### [Technical Problem]

Based on the above discussion, the disclosure provides an apparatus and a method for performing local re-routing based on a connection failure or flow control in an integrated access and backhaul system in a wireless communication system.

### [Solution to Problem]

According to various embodiments of the disclosure, provided is an operation method of an integrated access and backhaul (IAB) node in a wireless communication system, the method including receiving flow control feedback, determining whether a first link corresponding to a specific routing identifier (ID) is unavailable, based on the flow control feedback, selecting one entry among at least one entry in a backhaul (BH) routing configuration in case that the first link is unavailable, selecting an available second link corresponding to the selected entry, and performing routing based on the available second link.

According to various embodiments of the disclosure, provided is an operation method of an integrated access and backhaul (IAB) node in a wireless communication system, the method including detecting whether a backhaul link (BH) link related to the IAB node has a radio link failure (RLF), and in case of detecting the RLF of the BH link, transmitting a BH RLF detection indication to a child node of the IAB node for local re-routing of the child node.

According to various embodiments of the disclosure, provided is an apparatus for an integrated access and backhaul (IAB) node in a wireless communication system, the apparatus including a transceiver and at least one processor, wherein the at least one processor is configured to receive flow control feedback, determine whether a first link corresponding to a specific routing identifier (ID) is unavailable, based on the flow control feedback, select one entry among at least one entry in a backhaul (BH) routing configuration in case that the first link is unavailable, select an available second link corresponding to the selected entry, and perform routing based on the available second link.

According to various embodiments of the disclosure, provided is an apparatus for an integrated access and backhaul (IAB) node in a wireless communication system, the apparatus including a transceiver and at least one processor, wherein the at least one processor is configured to detect whether a backhaul link (BH) link associated with the IAB node has a radio link failure (RLF), and in case of detecting the RLF of the BH link, transmit a BH RLF detection indication to a child node of the IAB node for local re-routing of the child node.

### [Advantageous Effects of Invention]

An apparatus and a method according to various embodiments of the disclosure can perform local re-routing based on a connection failure or flow control in an integrated access and backhaul system in a wireless communication system.

Advantageous effects obtainable from the disclosure may not be limited to the above-mentioned effects, and other effects which are not mentioned may be clearly understood, through the following descriptions, by those skilled in the art to which the disclosure pertains.

### [Brief Description of Drawings]

FIG. 1 illustrates the structure of a wireless communication system according to an embodiment of the disclosure;
FIG. 2 illustrates a radio protocol structure of a wireless communication system according to an embodiment of the disclosure;
FIG. 3 illustrates the structure of a wireless communication system according to an embodiment of the disclosure;
FIG. 4 illustrates a radio protocol structure of a wireless communication system according to an embodiment of the disclosure;
FIG. 5 illustrates a structure of a terminal in a wireless communication system according to an embodiment of the disclosure;
FIG. 6 illustrates a structure of a base station in a wireless communication system according to an embodiment of the disclosure;
FIG. 7 illustrates an example of a process of receiving an RLF indication or flow control feedback in an IAB topology in a wireless communication system according to an embodiment of the disclosure;
FIG. 8 illustrates a routing table of an IAB node in a wireless communication system according to an embodiment of the disclosure;
FIG. 9 illustrates routing-related information of a header in a BAP PDU in a wireless communication system according to an embodiment of the disclosure; and
FIG. 10 illustrates a local re-routing process at the time of receiving an RLF indication in a wireless communication system according to an embodiment of the disclosure.

### [Best Mode for Carrying out the Invention]

The terms used in the disclosure are only used to describe specific embodiments, and are not intended to limit the disclosure. A singular expression may include a plural expression unless they are definitely different in a context. Unless defined otherwise, all terms used herein, including technical and scientific terms, have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software.

Hereinafter, the operation principle of the disclosure will be described in detail with reference to the accompanying drawings. In describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used below, and other terms referring to subjects having equivalent technical meanings may be used.

In the following description of the disclosure, terms and names defined in the 3rd generation partnership project long term evolution (3GPP LTE) standards will be used for the sake of descriptive convenience. However, the disclosure is not limited by these terms and names, and may be applied in the same way to systems that conform other standards. In the disclosure, the term "eNB" may be interchangeably used with the term "gNB". That is, a base station described as "eNB" may indicate "gNB". In addition, the term "terminal" may refer to not only mobile phones, NB-IoT devices, and sensors, but also other wireless communication devices.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card. Furthermore, the "unit" in the embodiments may include one or more processors.

In the following description of the disclosure, a detailed description of known functions or configurations incorporated herein will be omitted when it is determined that the description may make the subject matter of the disclosure unnecessarily unclear. Hereinafter, embodiments of the disclosure will be described in detail with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used below, and other terms referring to subjects having equivalent technical meanings may be used. For example, in the following description, the term "terminal" may refer to an MAC entity in each terminal that exists for each of a master cell group (MCG) and a secondary cell group (SCG).

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing communication functions. Of course, examples of the base station and the terminal are not limited thereto.

In particular, the disclosure may be applied to 3GPP NR (5th generation mobile communication standard). Furthermore, the disclosure may be applied to intelligent services (e.g., smart homes, smart buildings, smart cities, smart cars or connected cars, healthcare, digital education, retail business, security and safety-related services, etc.) on the basis of 5G communication technology and IoT-related technology. In the disclosure, the term "eNB" may be interchangeably used with the term "gNB". That is, a base station described as "eNB" may indicate "gNB". In addition, the term "terminal" may refer to not only mobile phones, NB-IoT devices, and sensors, but also other wireless communication devices.

A wireless communication system is advancing to a broadband wireless communication system for providing high-speed and high- quality packet data services using communication standards, such as high-speed packet access (HSPA) of 3GPP, LTE {long-term evolution or evolved universal terrestrial radio access (E-UTRA)}, LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink indicates a radio link through which a user equipment (LTE) (or a mobile station (MS)) transmits data or control signals to a base station (BS) (eNode B), and the downlink indicates a radio link through which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

According to some embodiments, eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km2) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5 ms, and also requires a packet error rate of 10-5 or less. Therefore, for the services supporting URLLC, a 5G system must provide a transmit time interval (TTI) shorter than those of other services, and also may require a design for assigning a large number of resources in a frequency band in order to secure reliability of a communication link.

The above-described three services considered in the 5G communication system, that is, eMBB, URLLC, and mMTC, may be multiplexed and transmitted in a single system. In order to satisfy different requirements of the respective services, different transmission/reception techniques and transmission/reception parameters may be used between the services. However, the above mMTC, URLLC, and eMBB are merely examples of different types of services, and service types to which the disclosure is applied are not limited to the above examples.

In the following description of embodiments of the disclosure, LTE, LTE-A, LTE Pro, or 5G (or, NR, next generation mobile communication) systems will be described by way of example, but the embodiments of the disclosure may be applied to other communication systems having similar technical backgrounds or channel types. Furthermore, based on determinations by those skilled in the art, the embodiments of the disclosure may be applied to other communication systems through some modifications without significantly departing from the scope of the disclosure.

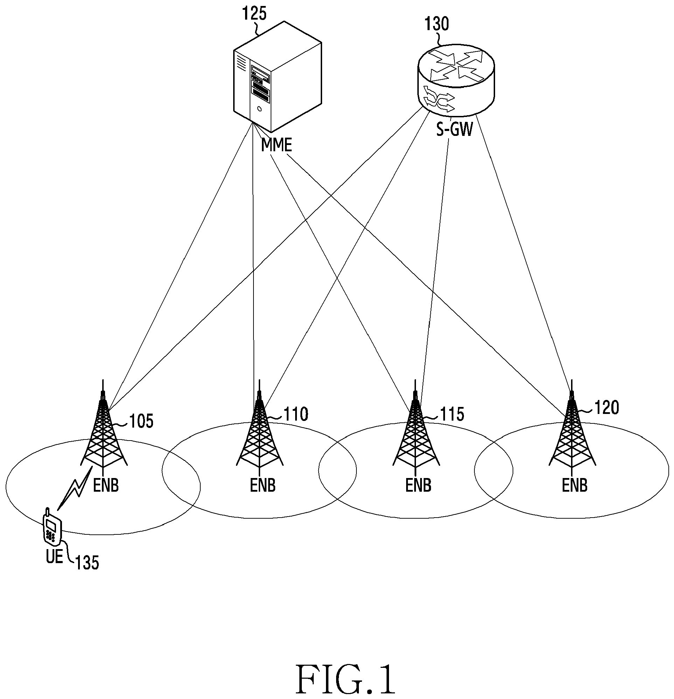

FIG. 1 illustrates the structure of a wireless communication system according to an embodiment of the disclosure. Specifically, FIG. 1 illustrates the structure of a 4G LTE system.

Referring to FIG. 1, as illustrated, a radio access network of an LTE system may include next-generation base stations (evolved node Bs, hereinafter ENBs, Node Bs, or base stations) 105, 110, 115, and 120, a mobility management entity (MME) 125, and a serving-gateway (S-GW) 130. A user equipment (hereinafter, UE or terminal) 135 may access an external network through the ENBs 105 to 120 and the S-GW 130.

In FIG. 1, ENBs 105 to 120 may correspond to existing Node Bs of a UMTS system. The ENB may be connected to the UE 135 through a radio channel and perform a more complex role than the existing Node B. In the LTE system, all user traffic including real-time services such as voice over IP (VoIP) through Internet protocol may be serviced through a shared channel. Accordingly, a device for performing scheduling by collecting status information such as buffer status, available transmit power status, and channel status of UEs may be needed, and ENBs 105 to 120 may be in charge of this. One ENB may typically control multiple cells. For example, in order to implement a transmission rate of 100 Mbps, an LTE system may use orthogonal frequency division multiplexing (OFDM) as a radio access technology in a 20 MHz bandwidth, for example. In addition, the ENB may apply an adaptive modulation & coding (AMC) method that determines a modulation scheme and a channel coding rate according to the channel condition of the terminal. The S-GW 130 is a device that provides a data bearer, and may generate or remove a data bearer under the control of the MME 125. The MME is a device in charge of various control functions as well as a mobility management function for a terminal, and may be connected to a plurality of base stations.

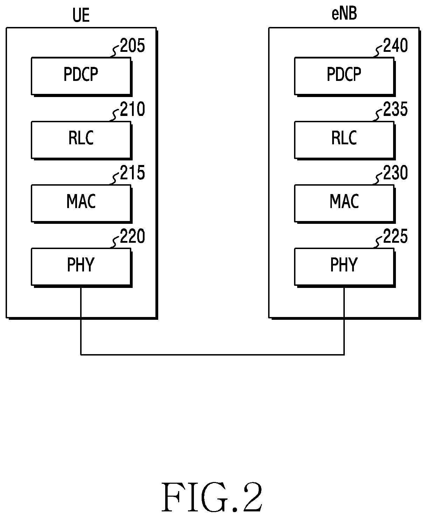

FIG. 2 illustrates a radio protocol structure of a wireless communication system according to an embodiment of the disclosure. Specifically, FIG. 2 illustrates a radio protocol structure of a 4G LTE system.

Referring to FIG. 2, in each of a UE and an ENB, the radio protocol of the LTE system may include packet data convergence protocols (PDCPs) 205 and 240, radio link controls (RLCs) 210 and 235, medium access controls (MACs) 215 and 230, and physical (PHY) devices (or layers) 220 and 225. Of course, the disclosure is not limited to the above examples, and may include fewer or more devices than the above examples.

According to an embodiment of the disclosure, the PDCP may be responsible for operations such as IP header compression/restoration. The main functions of the PDCP may be summarized as follows. Of course, the disclosure is not limited to the following examples.
- Header compression and decompression function (Header compression and decompression: ROHC only)
- Transfer function of user data (Transfer of user data)
- In-sequence delivery function (In-sequence delivery of upper layer PDUs at PDCP Re-establishment procedure for RLC acknowledged mode (AM))
- Reordering function (For split bearers in DC (only support for RLC AM): PDCP PDU routing for transmission and PDCP PDU reordering for reception)
- Duplicate detection function (Duplicate detection of lower layer SDUs at PDCP Re-establishment procedure for RLC AM)
- Retransmission function (Retransmission of PDCP SDUs at handover and, for split bearers in DC, of PDCP PDUs at PDCP data-recovery procedure, for RLC AM)
- Ciphering and deciphering function (Ciphering and deciphering)
- Timer-based SDU discard function (Timer-based SDU discard in uplink);

According to an embodiment, the radio link controls (hereinafter, referred to as RLCs) 210 and 235 reconfigure the PDCP packet data unit (PDU) to an appropriate size to perform the ARQ operation or the like. The main functions of the RLC are summarized as follows. Of course, it is not limited to the examples below.
- Data transfer function (Transfer of upper layer PDUs)
- ARQ function (Error Correction through ARQ (only for AM data transfer))
- Concatenation, segmentation, reassembly functions (Concatenation, segmentation and reassembly of RLC SDUs (only for UM and AM data transfer))
- Re-segmentation function (Re-segmentation of RLC data PDUs (only for AM data transfer))
- Reordering function (Reordering of RLC data PDUs (only for UM and AM data transfer)
- Duplicate detection function (Duplicate detection (only for UM and AM data transfer))
- Error detection function (Protocol error detection (only for AM data transfer))
- RLC SDU discard function (RLC SDU discard (only for UM and AM data transfer))
- RLC Re-establishment function (RLC Re-establishment).

According to an embodiment, the MACs 215 and 230 are connected to several RLC layer devices configured in one terminal and perform an operation of multiplexing RLC PDUs into an MAC PDU and demultiplexing the RLC PDUs from the MAC PDU. The main functions of the MAC are summarized as follows. Of course, it is not limited to the examples below.
- Mapping function (Mapping between logical channels and transport channels)
- Multiplexing/demultiplexing function (Multiplexing/demultiplexing of MAC SDUs belonging to one or different logical channels into/from transport blocks (TB) delivered to/from the physical layer on transport channels)
- Scheduling information reporting function (Scheduling information reporting)
- HARQ function (Error correction through HARQ)
- Priority handling function between logical channels (Priority handling between logical channels of one UE)
- Priority handling function between terminals (Priority handling between UEs by means of dynamic scheduling)
- MBMS service identification function (MBMS service identification)
- Transport format selection function (Transport format selection)
- Padding function (Padding)

According to an embodiment, the physical layers 220 and 225 perform an operation of channel-coding and modulating higher layer data, making the higher layer data as an OFDM symbol and transmitting them to a radio channel, or demodulating and channel-decoding the OFDM symbol received through the radio channel and transmitting the demodulated and channel-decoded OFDM symbol to the higher layer. Of course, it is not limited to the above example.

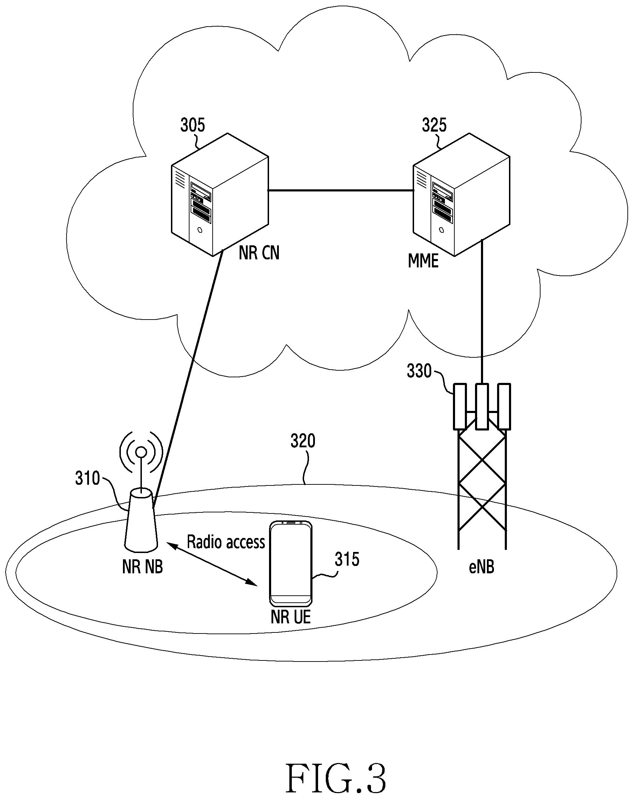

FIG. 3 illustrates a structure of a next-generation mobile communication system according to an embodiment of the disclosure. Specifically, FIG. 3 shows the structure of a 5G NR system.

Referring to FIG. 3, a radio access network of a next-generation mobile communication system (hereinafter referred to as NR or 5G) may include a next generation base station (new radio node B, hereinafter NR gNB or NR base station) 310 and a next-generation radio core network (new radio core network (NR CN)) 305. A next-generation radio user terminal (new radio user equipment, hereinafter, NR UE or UE) 315 may access an external network through the NR gNB 310 and the NR CN 305.

In FIG. 3, the NR gNB 310 may correspond to an evolved node B (eNB) of the existing LTE system. The NR gNB is connected to the NR UE 315 via a radio channel and may provide a service superior to the existing node B. In the next-generation mobile communication system, all user traffic may be served through a shared channel. Therefore, an apparatus for collecting state information such as a buffer state, an available transmission power state, and a channel state of the LTEs to perform scheduling is required, and the NR gNB 310 may be in charge of this function. One NR gNB 310 may control a plurality of cells. In the next-generation mobile communication system, bandwidths beyond the current maximum bandwidths may be applied to achieve ultra-high data rates compared to current LTE. In addition, orthogonal frequency division multiplexing (OFDM) may be used as a radio access technology, and beamforming technology may be used in addition.

Further, according to some embodiments, the NR gNB may apply an adaptive modulation and coding (hereinafter, referred to as AMC) scheme determining a modulation scheme and a channel coding rate according to a channel status of the terminal. The NR CN 305 may perform functions such as mobility support, bearer setup, QoS setup, and the like. The NR CN 305 is a device for performing a mobility management function for the terminal and various control functions and may be connected to a plurality of base stations. In addition, the next-generation mobile communication system may interwork with the existing LTE system, and the NR CN may be connected to the MME 325 through the network interface. The MME may be connected to an eNB 330 which is the existing base station.

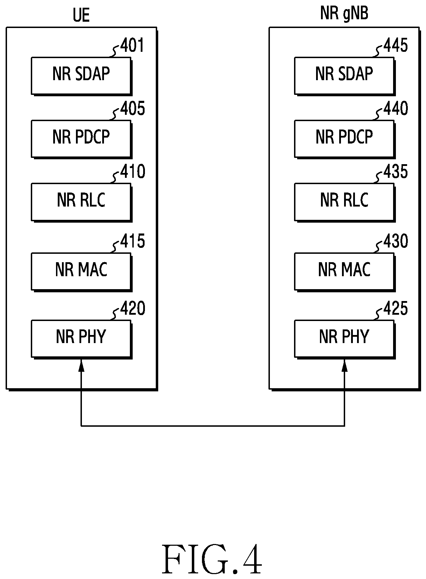

FIG. 4 illustrates a radio protocol structure of a wireless communication system according to an embodiment. Specifically, FIG. 4 illustrates a radio protocol structure of an NR system.

Referring to FIG. 4, the radio protocol of the next-generation mobile communication system may include NR service data adaptation protocols (SDAPs) 401 and 445, NR PDCPs 405 and 440, NR RLCs 410 and 435, NR MACs 415 and 430, and NR PHY devices (or layers) 420 and 425, respectively, in the terminal and the NR base station. The radio protocol of the next-generation mobile communication systems are, of course, not limited to the above examples and may include fewer or more devices than the above examples.

According to an embodiment, the main functions of the NR SDAPs 401 and 445 may include some of the following functions. However, they are not limited to the following examples.
- Transfer function of user data (Transfer of user plane data)
- Mapping between a QoS flow and a data bearer (DRB) for both uplink (UL) and downlink (DL)
- Marking QoS flow ID in both DL and UL packets
- Mapping a reflective QoS flow to a DRB for uplink SDAP PDUs (reflective QoS flow to DRB mapping for the UL SDAP PDUs)

With regard to the SDAP layer device, the UE may be configured with, through a radio resource control (RRC) message, whether to use the header of the SDAP layer device or the function of the SDAP layer device for each PDCP layer device, for each bearer, or for each logical channel. Further, in the SDAP layer device, when the SDAP header is configured, the UE may indicate to update or reconfigure mapping information for uplink and downlink QoS flows and data bearers by using the non-access stratum (NAS) quality of service (QoS) reflective setting 1-bit indicator (NAS reflective QoS) and the access stratum (AS) QoS reflective setting 1-bit indicator (AS reflective QoS) of the SDAP header. According to some embodiments, the SDAP header may include QoS flow ID information indicating QoS. According to some embodiments, the QoS information may be used as data processing priority and scheduling information to support a smooth service.

According to an embodiment, the main functions of the NR PDCPs 405 and 440 may include some of the following functions. However, they are not limited to the following examples.
- Header compression and decompression function (Header compression and decompression: ROHC only)
- Transfer function of user data (Transfer of user data)
- In-sequence delivery function (In-sequence delivery of upper layer PDUs)
- Out-of-sequence delivery function (Out-of-sequence delivery of upper layer PDUs)
- Reordering function (PDCP PDU reordering for reception)
- Duplicate detection function (Duplicate detection of lower layer SDUs)
- Retransmission function (Retransmission of PDCP SDUs)
- Ciphering and deciphering function (Ciphering and deciphering)
- Timer-based SDU discard function (Timer-based SDU discard in uplink)

In the above description, the reordering function of the NR PDCP device may refer to a function of reordering PDCP PDUs received in a lower layer in order based on a PDCP sequence number (SN). The reordering function of the NR PDCP may include a function of transmitting data to an upper layer in the reordered sequence. Alternatively, the reordering function of the NR PDCP device may include a function of directly transmitting data to an upper layer without taking the sequence into consideration, a function of reordering the sequence and recording lost PDCP PDUs, a function of providing a state report on the lost PDCP PDUs to a transmission side, and a function of requesting retransmission of the lost PDCP PDUs.

According to some embodiments, the main functions of the NR RLCs 410 and 435 may include some of the following functions. However, they are not limited to the following examples.
- Data transfer function (Transfer of upper layer PDUs);
- In-sequence delivery function (In-sequence delivery of upper layer PDUs);
- Out-of-sequence delivery function (Out-of-sequence delivery of upper layer PDUs);
- ARQ function (Error correction through HARQ);
- Concatenation, segmentation, reassembly function (Concatenation, segmentation and reassembly of RLC SDUs);
- Re-segmentation function (Re-segmentation of RLC data PDUs);
- Reordering function (Reordering of RLC data PDUs);
- Duplicate detection function (Duplicate detection);
- Error detection function (Protocol error detection);
- RLC SDU discard function (RLC SDU discard); and
- RLC re-establishment function (RLC re-establishment).

In the above description, the in-sequence delivery function of the NR RLC device refers to a function of delivering RLC SDUs received from a lower layer to an upper layer in order. In case that an original RLC SDU is divided into a plurality of RLC SDUs and received, the in-sequence delivery function of the NR RLC device may include a function of reassembling and delivering the divided plurality of RLC SDUs.

The in-sequence delivery function of the NR RLC device may include a function of rearranging the received RLC PDUs based on the RLC sequence number (SN) or the PDCP sequence number (SN), a function of recording the lost RLC PDUs by the reordering, a function of reporting a state of the lost RLC PDUs to the transmitting side, and a function of requesting a retransmission of the lost RLC PDUs.

The in-sequence delivery function of the NR RLC device may include a function of delivering only the RLC SDUs before the lost RLC SDU to the upper layer in order when there is the lost RLC SDU.

The in-sequence delivery function of the NR RLC device may include a function of delivering all the received RLC SDUs to the upper layer in order before a predetermined timer starts if the timer expires even if there is the lost RLC SDU.

The in-sequence delivery function of the NR RLC device may include a function of delivering all the RLC SDUs received until now to the upper layer in order if the predetermined timer expires even if there is the lost RLC SDU.

The NR RLC may process the RLC PDUs in the received order regardless of the order of a sequence number (out-of-sequence delivery), and may deliver the processed RLC PDUs to the NR PDCP device.

In the case of segment reception, the NR RLC device may receive the segments which are stored in a buffer or to be later received and reconfigure the RLC PDUs into one complete RLC PDU and then deliver the complete RLC PDU to the NR PDCP device.

The NR RLC layer may not include the concatenation function and may perform the function in the NR MAC layer or may be replaced by the multiplexing function of the NR MAC layer.

In the above description, the out-of-sequence delivery function of the NR RLC device refers to a function of directly delivering the RLC SDUs received from the lower layer to the upper layer regardless of order. The out-of-sequence delivery function of the NR RLC device may include a function of reassembling and delivering an original RLC SDU that is divided into several RLC SDUs and received. The out-of-sequence delivery function of the NR RLC device may include a function of storing and reordering the RLC SN or the PDCP SN of the received RLC PDUs to record the lost RLC PDUs.

According to some embodiments, the NR MACs 415 and 430 may be connected to several NR RLC layer devices configured in one terminal, and the main functions of the NR MAC may include some of the following functions. However, they are not limited to the following examples.
- Mapping function (Mapping between logical channels and transport channels)
- Multiplexing and demultiplexing function (Multiplexing/demultiplexing of MAC SDUs)
- Scheduling information reporting function (Scheduling information reporting)
- HARQ function (Error correction through HARQ)
- Priority handling function between logical channels (Priority handling between logical channels of one UE)
- Priority handling function between terminals (Priority handling between UEs by means of dynamic scheduling)
- MBMS service identification function (MBMS service identification)
- Transport format selection function (Transport format selection)
- Padding function (Padding)

The NR PHY layers 420 and 425 may perform an operation of channel-coding and modulating higher layer data, making higher layer data as an OFDM symbol and transmitting them to a radio channel, or demodulating and channel-decoding the OFDM symbol received through the radio channel and transmitting the demodulated and channel-decoded OFDM symbol to the higher layer. However, they are not limited to the above examples.

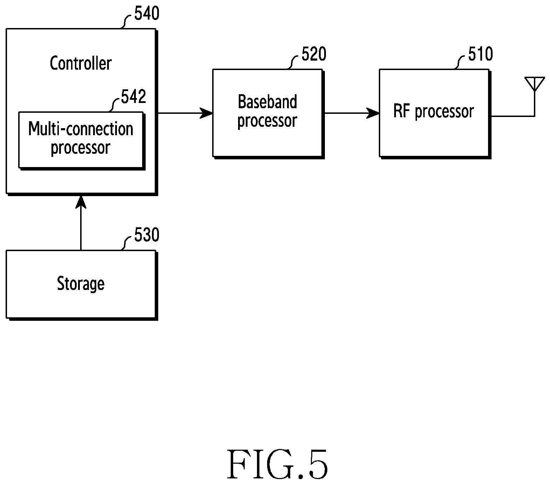

FIG. 5 illustrates the structure of a terminal according to an embodiment of the disclosure.

Referring to FIG. 5, the terminal may include a radio frequency (RF) processor 510, a baseband processor 520, a storage 530, and a controller 540. In addition, the controller 540 may further include a multi-connection processor 542. Of course, the above examples are not limited thereto, and the terminal may include fewer or more configurations than the configuration shown in FIG. 5.

The RF processor 510 may perform a function for transmitting and receiving signals via a wireless channel, such as band conversion and amplification of signals. That is, the RF processor 510 may up-convert a baseband signal provided by the baseband processor 520 into an RF band signal and then transmit the RF band signal via an antenna, and may down-convert an RF band signal received via the antenna into a baseband signal. For example, the RF processor 510 may include a transmission filter, a reception filter, an amplifier, a mixer, an oscillator, a digital to analog converter (DAC), an analog to digital converter (ADC), and the like. However, they are not limited to the above examples. In FIG. 5, only one antenna is shown, but the terminal may include multiple antennas. Further, the RF processor 510 may include multiple RF chains. Furthermore, the RF processor 510 may perform beamforming. For the beamforming, the RF processor 510 may adjust the phase and magnitude of each of the signals transmitted and received through the multiple antennas or antenna elements. Further, the RF processor may perform multi-input multi-output (MIMO), and may receive multiple layers when performing MIMO operation.

The baseband processors 520 performs conversion functions between baseband signals and bitstreams according to the physical layer specifications of the system. For example, when transmitting data, the baseband processor 520 generates complex symbols by encoding and modulating transmission bitstreams. In addition, upon receiving data, the baseband processor 520 may demodulate and decode the baseband signal provided from the RF processor 510 to restore the received bitstream. For example, when the data is transmitted according to an orthogonal frequency division multiplexing (OFDM) scheme, the baseband processor 520 generates the complex symbols by encoding and modulating the transmission bitstreams and maps the complex symbols to subcarriers and then configures OFDM symbols through an inverse fast Fourier transform (IFFT) operation and cyclic prefix (CP) insertion. In addition, upon receiving data, the baseband processor 520 may divide the baseband signal provided from the RF processor 510 into OFDM symbol units and restore the signals mapped to the subcarriers through a fast Fourier transform (FFT) operation, and then may restore the received bitstreams through demodulation and decoding.

The baseband processor 520 and the RF processor 510 transmit and receive signals as described above. The baseband processor 520 and the RF processor 510 may be referred to as a transmitter, a receiver, a transceiver, or a communication unit. Further, at least one of the baseband processor 520 and the RF processor 510 may include multiple communication modules in order to support multiple different radio access technologies. In addition, at least one of the baseband processor 520 and the RF processor 510 may include different communication modules in order to process signals of different frequency bands. For example, the different radio access technologies may include a wireless LAN (e.g., IEEE 802.11), a cellular network (e.g., LTE), and the like. In addition, the different frequency bands may include a super high frequency (SHF) (e.g., 2.NRHz, NRhz) band and a millimeter wave (e.g., 60 GHz) band.

The storage 530 stores data such as a basic program, an application program, and configuration information for the operation of the terminal. In particular, the storage 530 may store information related to a second access node for performing wireless communication using a second radio access technology. In addition, the storage 530 provides the stored data according to a request of the controller 540. The storage 530 may include a storage medium, such as a ROM, RAM, hard disk, CD-ROM, and DVD, or a combination of storage media. Additionally, the storage 530 may include multiple memories.

The controller 540 controls overall operations of the terminal. For example, the controller 540 transmits and receives the signals through the baseband processor 520 and the RF processor 510. In addition, the controller 540 writes and reads data to and from the storage 530. To this end, the controller 540 may include at least one processor. For example, the controller 540 may include a communication processor (CP) for performing a control for communication and an application processor (AP) for controlling a higher layer such as an application program. In addition, at least one configuration in the terminal may be implemented on a single chip. According to an embodiment of the disclosure, the controller 540 may control each configuration of the terminal so as to transmit and receive control information to and from the IAB system. A method of operating the terminal according to an embodiment of the disclosure will be described in more detail below.

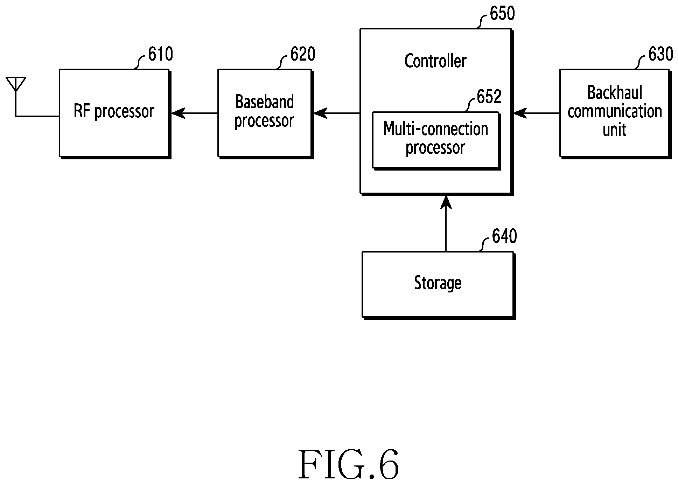

FIG. 6 illustrates the structure of a base station in a wireless communication system according to an embodiment of the disclosure.

Referring to FIG. 6, the base station may include an RF processor 610, a baseband processor 620, a backhaul communication unit 630, a storage 640, and a controller 650. In addition, the controller 650 may further include a multi-connection processor 652. Of course, it is not limited to the above example, and the base station may include fewer or more configurations than the configuration shown in FIG. 6.

The RF processor 610 may perform a function for transmitting and receiving signals via a wireless channel, such as band conversion and amplification of signals. That is, the RF processor 610 upconverts a baseband signal provided by the baseband processor 620 into an RF band signal and then transmits the RF band signal via an antenna, and down-converts an RF band signal received via the antenna into a baseband signal. For example, the RF processors 610 may include a transmission filter, a reception filter, an amplifier, a mixer, an oscillator, a DAC, an ADC, and the like. In FIG. 6, only one antenna is shown, but the RF processor 610 may include multiple antennas. Further, the RF processors 610 may include multiple RF chains. Furthermore, the RF processors 610 may perform beamforming. For the beamforming, the RF processors 610 may adjust the phase and magnitude of each of the signals transmitted and received through the multiple antennas or antenna elements. The RF processor 610 may perform a downlink MIMO operation by transmitting one or more layers.

The baseband processor 620 may perform the conversion function between the baseband signal and the bitstream according to the physical layer specification of the first radio access technology. For example, at the time of data transmission, the baseband processor 620 generates the complex symbols by encoding and modulating the transmission bitstreams. In addition, upon receiving data, the baseband processor 620 demodulates and decodes the baseband signal provided from the RF processor 610 to restore the received bitstream. For example, when the data is transmitted according to the OFDM scheme, the baseband processor 620 generates the complex symbols by encoding and modulating the transmission bitstreams and maps the complex symbols to the subcarriers, and then configures the OFDM symbols through the IFFT operation and the CP insertion. In addition, upon receiving data, the baseband processor 620 may divide the baseband signal provided from the RF processor 610 into the OFDM symbol units and restore the signals mapped to the subcarriers through the FFT operation, and then may restore the received bitstreams through the demodulation and decoding. The baseband processor 620 and the RF processor 610 transmit and receive the signals as described above. Accordingly, the baseband processor 620 and the RF processor 610 may be referred to as the transmitter, the receiver, the transceiver, the communication unit, or a wireless communication unit. The base station may transmit and receive signals to and from a terminal by using the baseband processor 620 and the RF processor 610, and the signals may include control information and data.

The backhaul communication unit 630 provides an interface for performing communication with other nodes in a network. That is, the backhaul communication unit 630 may convert bitstreams transmitted from a main base station to other nodes, for example, a sub-base station, a core network etc., into a physical signal, and may convert the physical signal received from the other node into the bitstream. The backhaul communication unit 630 may be included in the communication unit.

The storage 640 stores the data such as a basic program, an application program, and configuration information for the operation of the main base station. The storage 640 may store information on a bearer allocated to the connected terminal, measurement results reported from the connected terminal, and the like. In addition, the storage 640 may store information serving as a criterion for determining whether to provide multiple connections to the terminal or whether to suspend the multiple connections. Further, the storage 640 provides the stored data according to the request of the controller 650. The storage 640 may include a storage medium, such as a ROM, RAM, hard disk, CD-ROM, and DVD, or a combination of storage media. Additionally, the storage 640 may include multiple memories. According to some embodiments, the storage 640 may store a program for performing a buffer status reporting method according to the disclosure.

The controller 650 controls the overall operations of the base station. For example, the controller 650 transmits and receives signals through the baseband processor 620 and the RF processor 610 or through the backhaul communication unit 630. In addition, the controller 650 writes and reads data to and from the storage 640. To this end, the controller 650 may include at least one processor. Further, at least one configuration of the base station may be implemented on a single chip.

According to an embodiment of the disclosure, the controller 650 may control each configuration of the base station so as to transmit and receive control information to and from the IAB system according to an embodiment of the disclosure. A method of operating the base station according to an embodiment of the disclosure will be described in more detail below.

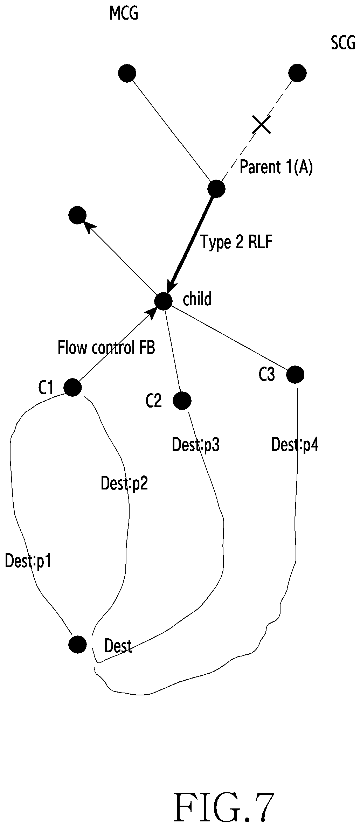

FIG. 7 illustrates an example of a process of receiving an RLF indication or flow control feedback in an IAB topology in a wireless communication system according to an embodiment of the disclosure.

Referring to FIG. 7, a parent IAB node is denoted by "A", and each of two dots above A denotes a parent node of A. According to an embodiment, a single connection (solid line) and a dual connection (dotted line and solid line) are shown. According to the case of a single connection (SC) or dual connection (DC), an RLF detection indication (i.e., type 2 RLF indication) is transmitted to a child node. The child node performs local re-routing based on the indication.

In another case, C1, C2, and C3 may exist as child nodes of child nodes. C1, C2, and C3 may deliver flow control feedback to a child node. Based on flow control feedback, the child node may perform local re-routing.

Destinations p1, p2, p3, and p4 all exist in a child node routing table.

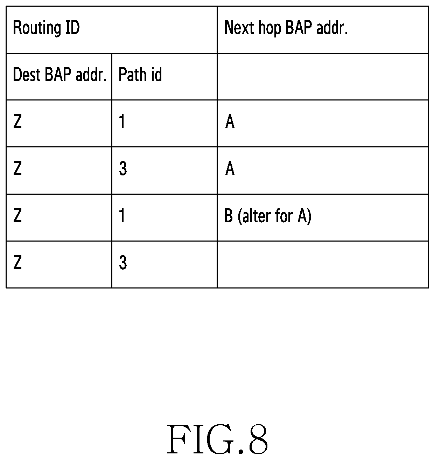

FIG. 8 illustrates a routing table of an IAB node in a wireless communication system according to an embodiment of the disclosure.

Each entry includes a destination BAP address and a path id, which serve as input values and are associated with a next hop BAP address. Upon receiving a packet, the IAB node identifies a routing ID in a header of a corresponding packet, and transmits the packet to a node of a next hop BAP address mapped to the corresponding routing ID.

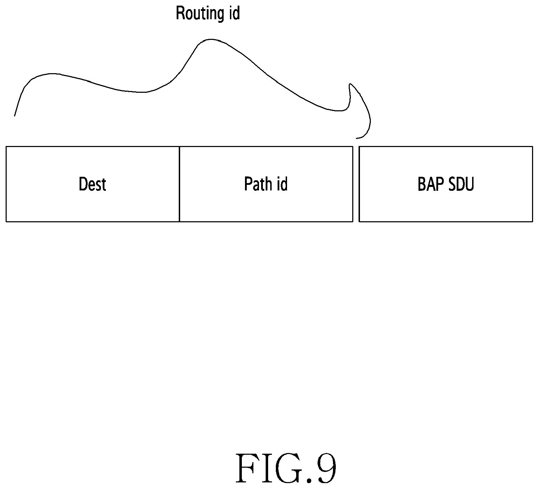

FIG. 9 illustrates routing-related information of a header in a BAP PDU in a wireless communication system according to an embodiment of the disclosure.

A routing ID included in the header of the BAP PDU is shown. Routing ID includes a destination BAP address, that is, a DEST field, and a path ID field. Each IAB node identifies this information and then compares the identified information with a routing entry so as to perform routing.

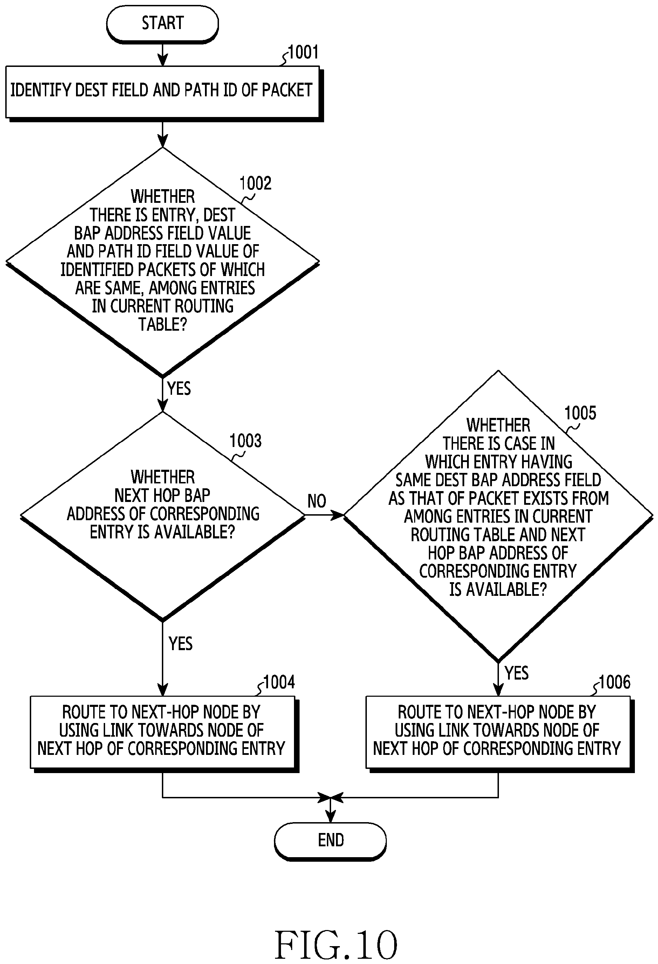

FIG. 10 illustrates a local re-routing process at the time of receiving an RLF indication in a wireless communication system according to an embodiment of the disclosure.

Referring to FIG. 10, in operation 1001, a destination field and a path ID of a packet are identified.

In operation 1002, it is determined whether entries in a current routing table include an entry, a destination BAP address field value and a path ID field value of identified packets of which are the same. In case that an entry having the same field values exist in the current routing table, the process proceeds to operation 1003.

In operation 1003, it is identified whether the next hop BAP address of the corresponding entry is available. If available, the process proceeds to operation 1004. If not available, the process proceeds to operation 1005.

In operation 1004, routing to a next-hop node is performed using a link toward the node of the next hop of the corresponding entry.

In operation 1005, it is determined whether entries in the current routing table include an entry having the same destination BAP address field as that of the packet, and the next hop BAP address of the entry is available. In case that the next hop BAP address of the entry is available, the process proceeds to operation 1006.

In operation 1006, routing to the next-hop node is performed using a link toward the node of the next hop of the corresponding entry.

Details of the embodiment of FIG. 10 are as follows.
(1) When an RLF occurs on a backhaul (BH) link of an IAB node, the IAB node transmits the corresponding RLF detection indication to a child node.
   (1-1) In case that the BH has a single connection, only the indication may be transmitted to the child node without a separate indicator.
      (1-1-1) Upon receiving the above information, the child node performs local re-routing.
      (1-1-2) In case that a value of a next-hop node (that is, indicating a link to a node to be routed) in the entry on the routing table of the child node indicates a node that has transmitted the RLF indication, local re-routing replaces the link with an alternative link. Specifically,
         (1-1-2-1) Upon receiving the RLF detection indication, the corresponding link (or the corresponding RLF indicated next-hop node) in the BAP routing entry is recognized as unavailable.
         (1-1-2-2) In a case of routing a packet, when there is a packet having the Dest field and path ID existing in the header that are the same as the Dest BAP address and path ID in the current routing entry, and the next hop BAP address of the entry is available, routing to the corresponding next hop is performed.
         (1-1-2-3) In case that the next-hop value of a routing entry having the same Dest field and the path ID as those of the packet indicates an unavailable link, only the Dest field of the packet is considered (regardless of path id) and a next hop of an available link becomes an alternative link. An IAB node may perform routing for each packet by using an alternative link.
         (1-1-2-4) In regard to the configuration, a donor node may pre-configure an alternative link by associating BH routing configuration with next hop information that already exists in each entry.
         (1-1-2-5) For example, if the existing BH routing configuration provides the IAB node with a list including multiple elements of Dest BAP address, path id, and next hop BAP address, the alternative link may add an alternative next hop BAP address to each of the elements of Dest BAP address, path id, and next hop BAP address. Accordingly, an alternative next hop may be configured for each normal next hop.
   (1-2) In the case of (path selective local re-routing) DC, a parent node may input an indicator indicating that the parent node itself is currently in DC state, and/or a predetermined routing ID or path id, and/or Dest BAP address to the type 2 RLF indication, and may deliver the same to a child node.
      (1-2-1) In this case, a predetermined routing ID or path ID, and/or Dest BAP address may refer to a routing ID or path ID, and/or Dest BAP address of entries on the routing configuration that uses a link, in which the RLF has occurred, among DC links as the next hop. That is, in FIG. 7, when node A is connected by two links of MCG/SCG, and RLF occurs on the SCG link, the predetermined routing ID or path ID, and/or Dest BAP address refers to information of all routing ids (i.e., destination BAP address and path id) of the entries that use the SCG node as the next hop in routing entries of the node A itself.
      (1-2-2) Upon receiving the above information and performing packet routing, the child node optionally routes to the next hop of the alternative link, among packets that use an entry, in which a node that has delivered the RLF indication is configured as a next hop, among the current routing entries. Specifically,
         (1-2-2-1) In case that, among packets (i.e., the next-hop node in the routing entry of the child node is node A) that are supposed to be delivered to the node that has delivered the above RLF indication, there is a packet having the same routing ID as that included in the RLF indication, or having the same Dest field and the path ID as that included in the RLF indication, routing to the next hop of the alternative link occurs.
         (1-2-2-2) Packets having the routing ids that do not match with those included in the RLF indication are routed as it is, without considering the alternative next hop in the current route entry.
         (1-2-2-3) In regard to configuration, a donor node may pre-configure the next hop of the alternative link by associating BH routing configuration with the next hop information that already exists in each entry.
         (1-2-2-4) In the embodiment of FIG. 7, node A delivers all routing ID values of routing entries that have SCG as the next hop to the child node. The child node identifies, in case that the next hop is node A, whether there is a packet having the same routing ID as that indicated in the RLF indication among UL packets of the child node itself, by referring the current routing entry of the child node itself. If there is a packet having the same routing ID as that indicated in the RLF indication, the child node uses an alternative link rather than node A. If not, the child node uses the current routing table as it is. In other words, packets using SCG are not transmitted to node A, but transmitted using an alternative link, while packets using MCG are transmitted to node A as they are. Node A may still use its routing table as it is, and since packets using the SCG link are not delivered through the child node, there is no need for performing local re-routing.
(2) In another embodiment, when BH RLF is detected in a single connection, when both links are in RLF or RLF recovery state in a dual connection state, or when the IAB node performs RRC Reestablishment operation, the IAB node may transmit the RLF detection indication to the child node.
   (2-1) Upon reception, a link to the node that has transmitted the RLF indication to a BAP routing entry of the child node is recognized as unavailable.
   (2-2) The child node having received the indication determines the link as a failure link (unavailable), and for each packet, in the current routing entry of the child node itself, the child node should route, to the next hop of the alternative link, packets having all routing IDs (Dest, path id) in the routing entry that has the node (node that has transmitted the RLF indication) as the next hop.
   (2-3) In regard to configuration, a donor node may pre-configure the next hop of the alternative link by associating BH routing configuration with the next hop information that already exists in each entry.
(3) Upon receiving flow control feedback, a node that has received the flow control feedback may perform local re-routing.
   (3-1) As a result of reception, when the congestion level for a specific routing ID is determined to be high, that is, the specific routing ID is unavailable (path selective local re-routing),
      (3-1-1) Among the entry of BH routing configuration, the next hop of a packet having the Dest and path ID matched for a packet having the corresponding routing id is changed from the existing next hop to the next hop of the alternative link, and routing is performed (i.e., only Dest is considered and one of the available links is selected (like R16), or a donor indicates the alternative link of node C1).
   (3-2) As a result of reception, when it is determined that the congestion level is high for a specific BH RLC CH or that the congestion level is high for all BH RLC CHs,
      (3-2-1) The next hop link recognizes the node that has delivered the feedback as unavailable.
      (3-2-2) All packets routed to a node that performs the corresponding feedback may be routed to the next hop of the alternative link.
(4) The IAB node may signal, to donors, capability bits for local re-routing due to RLF indication and local re-routing due to flow control feedback, respectively. This signal may be carried out through an RRC message or signaled as an OAM.
   (4-1) Upon receiving the above signal, donors may configure local re-routing due to RLF indication or flow control-based local re-routing operation to be allowed. Each case may be represented by a 1-bit indicator, and the corresponding signal may be carried through an RRC message or an F1AP message.

According to various embodiments of the disclosure, provided is a method for operating an integrated access and backhaul (IAB) node in a wireless communication system, the method including receiving flow control feedback, determining whether a first link corresponding to a specific routing identifier (ID) is unavailable, based on the flow control feedback, selecting one entry from among at least one entry in a backhaul (BH) routing configuration in case that the first link is unavailable, selecting an available second link corresponding to the selected entry, and performing routing based on the available second link.

According to various embodiments of the disclosure, whether the first link is unavailable may be determined based on whether the first link is congested based on the flow control feedback.

According to various embodiments of the disclosure, the routing may be performed for the next hop of the second link.

According to various embodiments of the disclosure, the entry may be selected based on whether a destination field of the second link corresponding to the entry is the same as a destination field of the first link.

According to various embodiments of the disclosure, the selection of the entry from among the at least one entry may not be based on whether a path field of the second link corresponding to the entry is the same as a path field of the first link.

According to various embodiments of the disclosure, provided is a method for operating an integrated access and backhaul (IAB) node in a wireless communication system, the method including detecting whether a backhaul link (BH) link associated with the IAB node has a radio link failure (RLF), and in case of detecting the RLF of the BH link, transmitting a BH RLF detection indication (BL RLF detection indication) to a child node of the IAB node for local re-routing of the child node.

According to various embodiments of the disclosure, the RLF of the BH link may be determined in at least one of a case in which the IAB node initiates a radio resource control (RRC) re-establishment, a case in which the IAB node is dual-connected with two BH links, and neither of the two BH links is capable of performing re-routing, or a case in which an RLF is detected on a BH link to which the IAB node is connected.

According to various embodiments of the disclosure, the local re-routing of the child node may be performed, after determining an RLF for a first link associated with the child node, for a next hop of a second link having the same destination field and path field as those of the first link.

According to various embodiments of the disclosure, provided is an apparatus for an integrated access and backhaul (IAB) node in a wireless communication system, the apparatus including a transceiver, and at least one processor, wherein the at least one processor is configured to receive flow control feedback, determine whether a first link corresponding to a specific routing identifier (ID) is unavailable, based on the flow control feedback, select one entry among at least one entry in a backhaul (BH) routing configuration in case that the first link is unavailable, select an available second link corresponding to the selected entry, and perform routing based on the available second link.

According to various embodiments of the disclosure, whether the first link is unavailable may be determined based on whether the first link is congested based on the flow control feedback.

According to various embodiments of the disclosure, the routing may be performed in the next hop of the second link.

According to various embodiments of the disclosure, the entry may be selected based on whether a destination field of the second link corresponding to the entry is the same as a destination field of the first link.

According to various embodiments of the disclosure, the selection of the entry among the at least one entry may not be based on whether a path field of the second link corresponding to the entry is the same as a path field of the first link.

According to various embodiments of the disclosure, provided is an apparatus for an integrated access and backhaul (IAB) node in a wireless communication system, the apparatus including a transceiver, and at least one processor, wherein the at least one processor is configured to detect whether a backhaul link (BH) link associated with the IAB node has a radio link failure (RLF), and in case of detecting the RLF of the BH link, transmit a BH RLF detection indication (BL RLF detection indication) to a child node of the IAB node for local re-routing of the child node.

According to various embodiments of the disclosure, the RLF of the BH link may be determined in at least one of a case in which the IAB node initiates a radio resource control (RRC) re-establishment, a case in which the IAB node is dual-connected with two BH links, and neither of the two BH links is capable of performing re-routing, or a case in which an RLF is detected on a BH link to which the IAB node is connected.

According to various embodiments of the disclosure, the local re-routing of the child node may be performed, after determining an RLF for a first link associated with the child node, for a next hop of a second link having the same destination field and path field as those of the first link.

The methods according to various embodiments described in the claims or the specification of the disclosure may be implemented by hardware, software, or a combination of hardware and software.

When implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments, but should be defined by the appended claims and equivalents thereof.

### [Industrial Availability]

The disclosure relates generally to a wireless communication system and, more specifically to, an apparatus and a method for performing local re-routing based on a connection failure or flow control in an integrated access and backhaul system in a wireless communication system.

## Claims

1. A method performed by an integrated access and backhaul (IAB) node in a wireless communication system, the method comprising:
receiving flow control feedback;
based on the flow control feedback, determining whether a first link corresponding to a specific routing identifier (ID) is unavailable;
in case that the first link is unavailable, selecting one entry among at least one entry in a backhaul (BH) routing configuration;
selecting an available second link corresponding to the selected entry; and
performing routing based on the available second link.

2. The method of claim 1, wherein whether the first link is unavailable is determined based on whether the first link is congested based on the flow control feedback.

3. The method of claim 1, wherein the routing is performed for next hop of the second link.

4. The method of claim 1, wherein the entry is selected based on whether a destination field of the second link corresponding to the entry is the same as a destination field of the first link.

5. The method of claim 4, wherein the selection of the entry among the at least one entry is not based on whether a path field of the second link corresponding to the entry is the same as a path field of the first link.

6. A method performed by an integrated access and backhaul (IAB) node in a wireless communication system, the method comprising:
detecting whether a backhaul link (BH) link associated with the IAB node has a radio link failure (RLF); and
in case that detecting the RLF of the BH link, transmitting a BH RLF detection indication (BL RLF detection indication) to a child node of the IAB node for local re-routing of the child node.

7. The method of claim 6, wherein the RLF of the BH link is determined in at least one of:
a case in which the IAB node initiates a radio resource control (RRC) re-establishment;
a case in which the IAB node is dual-connected with two BH links, and neither of the two BH links is capable of performing re-routing; or
a case in which an RLF is detected on a BH link to which the IAB node is connected.

8. The method of claim 6, wherein the local re-routing of the child node is performed, after determining an RLF for a first link associated with the child node, for a next hop of a second link having the same destination field and path field as those of the first link.

9. An integrated access and backhaul (IAB) node in a wireless communication system, the apparatus comprising:
a transceiver; and
at least one processor,
wherein the at least one processor is configured to:
receive flow control feedback;
based on the flow control feedback, determine whether a first link corresponding to a specific routing identifier (ID) is unavailable;
in case that the first link is unavailable, select one entry among at least one entry in a backhaul (BH) routing configuration;
select an available second link corresponding to the selected entry; and
perform routing based on the available second link.

10. The apparatus of claim 9, wherein whether the first link is unavailable is determined based on whether the first link is congested based on the flow control feedback.

11. The apparatus of claim 9, wherein the routing is performed for a next hop of the second link.

12. The apparatus of claim 9, wherein the entry is selected based on whether a destination field of the second link corresponding to the entry is the same as a destination field of the first link.

13. The apparatus of claim 12, wherein the selection of the entry among the at least one entry is not based on whether a path field of the second link corresponding to the entry is the same as a path field of the first link.

14. An integrated access and backhaul (IAB) node in a wireless communication system, the apparatus comprising:
a transceiver; and
at least one processor,
wherein the at least one processor is configured to:
detect whether a backhaul link (BH) link associated with the IAB node has a radio link failure (RLF); and
in case that detecting the RLF of the BH link, transmit a BH RLF detection indication (BL RLF detection indication) to a child node of the IAB node for local re-routing of the child node.

15. The apparatus of claim 14, wherein the RLF of the BH link is determined in at least one of:
a case in which the IAB node initiates a radio resource control (RRC) re-establishment;
a case in which the IAB node is dual-connected with two BH links, and neither of the two BH links is capable of performing re-routing; or
a case in which an RLF is detected on a BH link to which the IAB node is connected.
